(19) Europäisches Patentamt

European Patent Office

Office européen des brevets

(11) Veröffentlichungsnummer: **0 545 215 A1**

(12) **EUROPÄISCHE PATENTANMELDUNG**

(21) Anmeldenummer: **92119946.9**

(22) Anmeldetag: **24.11.92**

(51) Int. Cl.⁵: **A01B 3/46**, A01B 15/12,
A01B 61/04

(30) Priorität: **29.11.91 DE 4139389**

(43) Veröffentlichungstag der Anmeldung:
**09.06.93 Patentblatt 93/23**

(84) Benannte Vertragsstaaten:
**DE FR GB**

(71) Anmelder: **Maschinenfabriken Bernard Krone
GmbH**

Heinrich-Krone-Strasse 10
W-4441 Spelle(DE)

(72) Erfinder: **Krone, Bernard**
**Bernard-Krone-Strasse 11**
**W-4441 Spelle(DE)**
Erfinder: **Temmen, Hugo, Ing-grad.**
**Am Wöhle Hof 11**
**W-4441 Spelle(DE)**

㊴ **Pflug.**

㊗ Es handelt sich um einen Pflug, der technologisch wie ein Drehpflug einsetzbar ist, dessen Hauptholm (4) jedoch um eine etwa vertikale Achse verschwenkbar an einem Tragrahmen gehaltert ist, mit am Hauptholm (4) um Querachsen (12) verschwenkbar gelagerten Grindeln (8), an denen Pflugkörper (7) mit doppelseitigem Streichblech gehaltert sind, mit je einem vorgespannten Arbeitsspeicher (17; 18) je Grindel, wobei die Arbeitsspeicher (17; 18) einerseits um eine Achse (24) verschwenkbar dicht unter dem Hauptholm (4) und andererseits im Abstand zu der jeweiligen Querachse (12) um eine weitere Achse (19) verschwenkbar an Hebelteilen (15) der Grindel (8) befestigt sind und sich die zum Verschwenken der Pflugkörper (7) erforderliche Kraft beim Schwenkvorgang aus der Betriebsstellung in eine maximal ausgeschwenkte Stellung verringert.

FIG. 2

Rank Xerox (UK) Business Services
(3.10/3.6/3.3.1)

Die Erfindung betrifft einen Pflug, der wie ein Drehpflug einsetzbar ist, dessen Hauptholm aber um eine etwa vertikale Achse verschwenkbar ist, der im weiteren die im Oberbegriff des Anspruchs 1 genannten Merkmale aufweist. Der so definierte Pflug trägt im folgenden die Bezeichnung Kehrpflug.

Es sind Kehrpflüge bekannt, die einen mit einem landwirtschaftlichen Zugfahrzeug verbindbaren Tragrahmen aufweisen, an dem ein Hauptholm um eine etwa vertikale Achse verschwenkbar gelagert ist.

Am Hauptholm sind Werkzeuge befestigt, durch die eine wahlweise Pflugarbeit nach links oder rechts ermöglicht wird. Diese Werkzeuge sind durch Grindel am Hauptholm gehaltert. Eine einzelne Absicherung der Werkzeuge gegen Überlastung erfolgt entweder durch Einsatz von Abscherbolzen oder durch Verwendung von federnden Bauelementen für die Halterung der Grindel. Dies können Zug- oder Druckfedern sowie Blattfedern sein, deren Verwendung bei den relativ hohen auftretenden Kräften aber Nachteile in sich birgt. Neben Problemen bei der Dimensionierung dieser Federn sind hier auch Fragen des hohen Raumbedarfs bedeutend.

Es ist bekannt, daß Kolben-Zylinderanordnungen mit speziellen Gasspeichern zur Absicherung von Pflugkörpern zum Einsatz kommen, wobei hier Anstrengungen unternommen werden, den Raumbedarf gering zu halten. So sind bei Beet- und Drehpflügen beispielsweise Arbeitsspeicher in Hohlgrindeln untergebracht.
Die Arbeitsspeicher werden über Hebelsysteme abgestützt und mit Kräften beaufschlagt.

Durch die FR-A2 23 90 079 ist eine Steinsicherung für einen Kehrpflug bekannt, die den Erfordernissen bei solchen Pflügen schon teilweise entspricht.
Bei Kehrpflügen steht die Frage des Raumbedarfs besonders im Vordergrund. Wegen der Beweglichkeit des Hauptholmes dürfen speziell in seinem vorderen Bereich keine Bauelemente über oder neben dem Hauptholm des Kehrpfluges gelagert sein. Der Bauraum für die Steinsicherungen muß unterhalb des Hauptholmes liegen, wobei trotzdem ein möglichst großer Schwenkwinkel der Grindel mit den Arbeitswerkzeugen bei Auftreffen auf ein Hindernis möglich sein muß.
Weiterhin von großer Bedeutung für eine gute Funktionsfähigkeit der Steinsicherung ist die Kraft, die an der Werkzeugspitze aufzubringen ist, um eine Schwenkbewegung des Grindels mit dem jeweiligen Arbeitswerkzeug zu bewirken. Diese Kraft soll in der Arbeitsposition der Arbeitswerkzeuge groß sein und sich mit zunehmendem Schwenkwinkel der Grindel nach Möglichkeit verringern.

Dies ist bei der Steinsicherung nach der FR-A2 23 90 079 nicht der Fall. Hier ist diese Kraft je nach Funktionsweise des Arbeitsspeichers im halb oder voll ausgeschwenkten Zustand der Grindel mit den Arbeitswerkzeugen am größten. Die Bauelemente der Steinsicherung müssen grösser dimensioniert werden. Da die maximal auftretende Kraft an den Werkzeugspitzen normalerweise in der Arbeitsposition auftreten sollte, sind hier auch funktionsmindernde Nachteile und hoher Verschleiß zu erwarten.

Es ist Aufgabe der Erfindung, vollautomatische Steinsicherungen für die Arbeitswerkzeuge eines Kehrpfluges zu entwickeln, die nur geringen Bauraum unter dem Hauptholm erfordern, funktionssicher sind und durch die die einzelnen Arbeitswerkzeuge so abgestützt werden, daß die an den Werkzeugspitzen aufzubringende Kraft zum Verschwenken der Werkzeuge in ihrer Arbeitsposition groß ist und in einem Schwenkwinkelbereich, in dem die Aushubhöhe der Scharspitze relativ schnell zunimmt, geringer wird.

Zur Lösung dieser Aufgabe zeichnet sich der Kehrpflug der o.g. Art durch die im kennzeichnenden Teil des Anspruchs 1 angegebenen Merkmale aus. Hinsichtlich weiterer Ausgestaltungen wird auf die Ansprüche 2 bis 8 verwiesen.

Der Kehrpflug weist einen Tragrahmen auf, der an ein landwirtschaftliches Zugfahrzeug anbaubar ist und von diesem aus nach hinten ragt. Hinten am Tragrahmen ist ein Hauptholm um eine etwa vertikale Achse verschwenkbar gelagert. Zwischen Hauptholm und Tragrahmen ist ein Schwenkantrieb, vorzugsweise eine hydraulische, mit dem Zugfahrzeug verbundene und über ein Ventil ansteuerbare Kolben-Zylinderanordnung, vorgesehen, wodurch eine Schwenkbewegung des Hauptholmes relativ zum Tragrahmen durchführbar ist. Am Hauptholm sind über Grindel Pflugkörper befestigt, die so gestaltet sind, daß wahlweise je nach Schwenkposition des Hauptholmes eine Rechts- oder Linksablage von Furchenbalken möglich ist.

Um Überlastungen der Grindel und Pflugkörper auszuschließen, sind die Grindel um Querachsen verschwenkbar an Laschen des Hauptholmes befestigt. Die Querachsen sind horizontal und quer zur Längsachse des Hauptholmes ausgerichtet. Von den Querachsen aus erstrecken sich Hebelteile der Grindel nach oben in Richtung des Hauptholmes. Endseitig sind diese Hebelteile mit Arbeitsspeichern, vorzugsweise Kolben-Zylinderanordnungen mit Gasspeichern, verbunden, wobei eine Schwenkbewegung der Arbeitsspeicher relativ zu den Hebelteilen um Achsen möglich ist, die parallel zu den Querachsen im Abstand über diesen liegen. Die Arbeitsspeicher sind mit ihrem noch freien Ende an Haltern des Hauptholmes gelagert, wobei auch hier eine Schwenkbewegung um weitere Achsen möglich ist. Die Bewegung der Pflugkörper relativ zum Hauptholm hat eine Bewegung der zugehörigen Grindel und deren Hebelteile und damit eine Längenänderung der Arbeitsspeicher zur Folge. Diese sind so vorgespannt, daß in Betriebsstellung der Pflugkörper eine große Kraft über die Hebelteile und die Grindel auf die Pflugkörper übertragen wird. Erst wenn diese Kraft beim Pflügen überschritten wird, was insbesondere beim Auftreten von Steinen im Boden geschieht, können die Grindel mit den Pflugkörpern um die Querachsen verschwenken. Dabei verändern sich der Winkel zwischen dem Arbeitsspeicher und den Hebelteilen der Grindel und somit die Hebelverhältnisse derart, daß mit zunehmendem Schwenkwinkel eine Kraft über die Hebelteile auf die Grindel übertragen wird, die zunächst gleich oder geringfügig ansteigt und sobald die Aushubhöhe der Scharspitze relativ schnell bzw. deutlich sichtbar zunimmt, geringer wird.

Diese Kraft ist ausreichend, um zu erreichen, daß nach Verringerung des Bodenwiderstandes, also beispielsweise nach Passieren des Steines, die Pflugkörper wieder durch die Kraft der Arbeitsspeicher in den Erdboden eintauchen und die Grindel in die Betriebsstellung zurück verschwenken. Um diese Wirkungsweisen der Steinsicherung zu erreichen, befinden sich die Hebelteile, die durch die Querachse und die Achse, um die die Arbeitsspeicher verschwenkbar sind definiert sind, etwa rechtwinklig zur Symmetrielinie (bzw. zur Kraftwirkungsrichtung) der Arbeitsspeicher.

Beim Verschwenken der Grindel mit den Hebelteilen verändert sich dieser Winkel und es wird damit auch der Hebel verkürzt, an dem die Kraft des Arbeitsspeichers wirkt. Gleichzeitig verändert sich die Länge des Arbeitsspeichers, was eine geringfügige Vergrößerung der durch ihn ausgeübten Kraft zur Folge hat. Die Arbeitsspeicher sind so dimensioniert und vorgespannt, daß bereits nach dem Erreichen einer geringen Aushubhöhe der Scharspitzen die Verringerung des Krafthebels bedeutender ist als die Vergrößerung der Kraft.

Hieraus folgt, daß beim deutlichen Ausheben der Scharspitzen die zum Verschwenken der Pflugkörper erforderliche Kraft geringer wird.

Bei der so gestalteten Steinsicherung ist weiterhin von Vorteil, daß die Arbeitsspeicher sehr dicht unter dem Hauptholm gelegen sind und somit kein Hindernis für den Durchlauf von Furchenbalken oder einzuarbeitenden Ernterückständen bilden.

Durch die zweiteilige Gestaltung der Grindel ist ein großer Schwenkwinkel erreichbar, da die beiden Teile sich gegebenenfalls beidseitig am Arbeitsspeicher vorbei bewegen können.

Weitere Ausgestaltungen der Erfindung werden an Hand eines Ausführungsbeispiels beschrieben.

In den dazugehörigen Zeichnungen stellen im einzelnen dar:

Fig. 1: eine Draufsicht auf einen erfindungsgemäßen Kehrpflug in Arbeitsstellung hinter einem Zugfahrzeug in schematischer Darstellungsweise;

Fig. 2: Seitenansicht auf zwei Pflugkörper des Kehrpfluges aus Richtung des Pfeils S in Fig. 1, wobei ein Grindel mit Pflugkörper maximal ausgeschwenkt ist;

Fig. 3: Schnitt III - III aus Fig. 1.

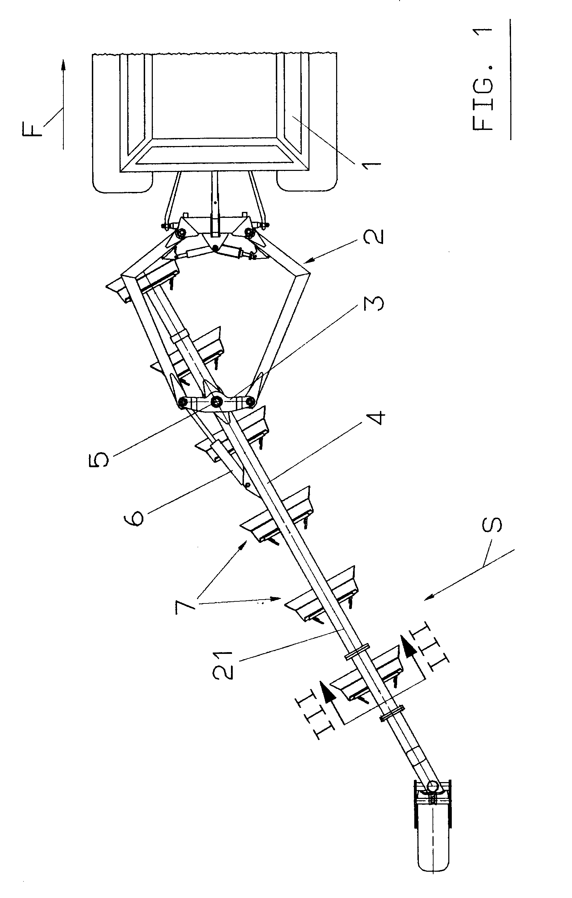

Aus Fig. 1 ist der Grundaufbau eines Kehrpfluges nach der Erfindung ersichtlich. An einem landwirtschaftlichen Zugfahrzeug 1 ist ein Tragrahmen 2 des Kehrpfluges heckseitig angebaut. Der Tragrahmen 2 weist eine sechseckige Grundform auf. An einem hinteren Querholm 3 des Tragrahmens 2 ist ein Hauptholm 4 um eine etwa vertikale Achse 5 verschwenkbar gelagert. Ein Schwenkantrieb 6, speziell eine Kolben-Zylinderanordnung 6, ist zwischen dem Tragrahmen 2 und dem Hauptholm 4 um Achsen verschwenkbar gelagert und mit der Hydraulikanlage des Zugfahrzeugs 1 verbunden. Durch Längenänderung der Kolben-Zylinderanordnung 6 nach Ventilbetätigung ist der Hauptholm 4 relativ zum Tragrahmen 2 bzw. zur Fahrtrichtung F um die Achse 5 verschwenkbar. Am Hauptholm 4 sind Pflugkörper 7 über Grindel 8 gehaltert. Je nach Schrägstellung des Hauptholmes 4 wird durch die Pflugkörper 7 je ein Furchenbalken nach rechts oder links gewendet. Somit ist der Kehrpflug technologisch wie ein Drehpflug einsetzbar.

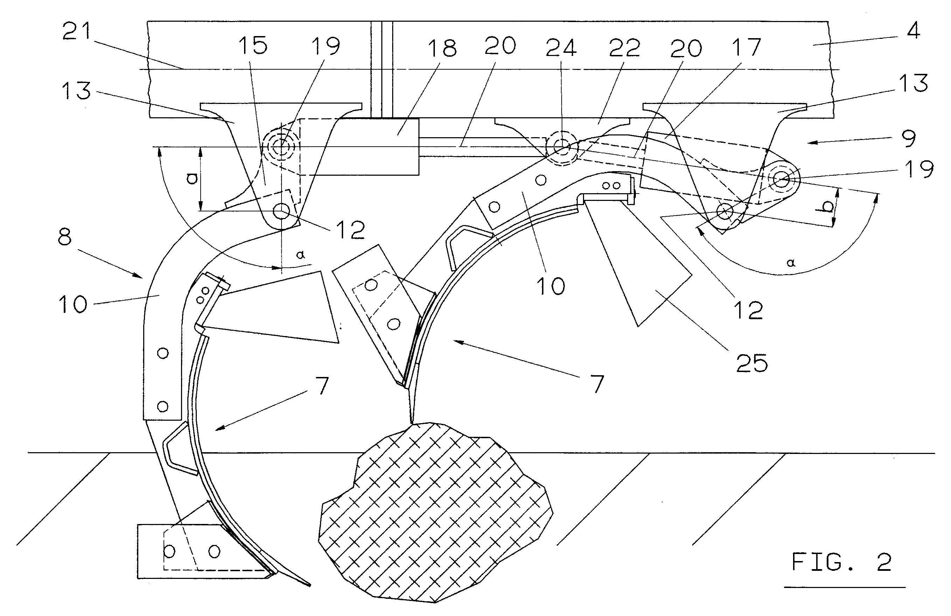

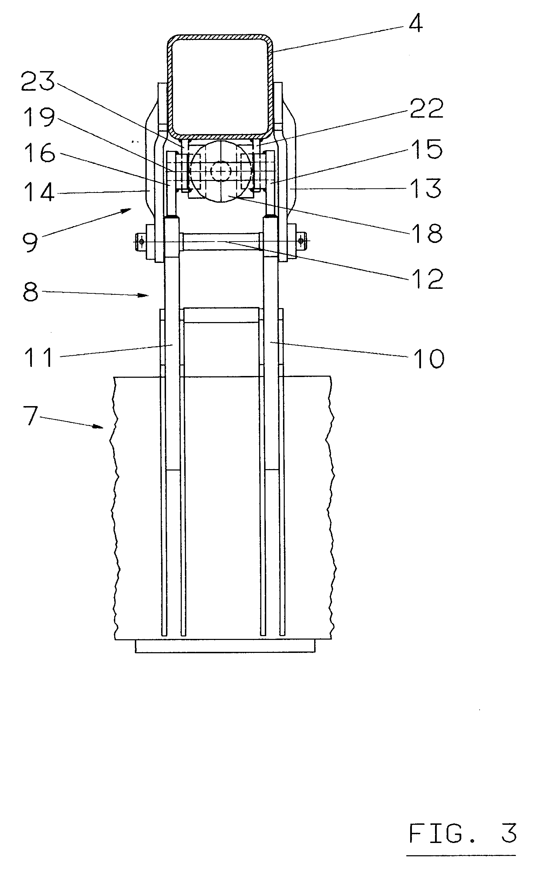

Durch Fig. 2 und 3 ist die Halterung der Grindel 8 am Hauptholm 4 verdeutlicht. Es sind Steinsicherungen 9 vorgesehen, durch die die Pflugkörper 7 und die Grindel 8 vor Schäden bei überdurchschnittlicher Belastung geschützt werden.

Die Grindel 8 bestehen jeweils aus zwei Grindelteilen 10, 11 die nebeneinander angeordnet, unten mit den Pflugkörpern verschraubt und oben um eine Querachse 12 verschwenkbar zwischen Laschen 13, 14 des Hauptholmes 4 gehaltert sind. An beiden Grindelteilen 10, 11 sind oben Hebelteile 15, 16 verschweißt, zwischen denen Arbeitsspeicher 17 oder 18 um eine weitere Achse 19 verschwenkbar gelagert sind. Diese Achsen 19 sind parallel zu den Querachsen 12 im Abstand etwa senkrecht über diesen gelegen. Die Arbeitsspeicher 17; 18 sind in Betriebsstellung der Grindel 8 dicht unter dem Hauptholm 4 gelegen, wobei ihre Symmetrieachsen 20 etwa parallel zu einer Längsachse 21 des Hauptholmes 4 ausgerichtet sind. Das noch freie Ende der Arbeitsspeicher 17; 18 ist an Haltern 22, 23 des Hauptholmes 4 um weitere Achsen 24 verschwenkbar gelagert. Die Arbeitsspeicher 17; 18 sind vorgespannt, so daß in Betriebsstellung der Pflugkörper 7 eine große Kraft auf die Hebelteile 15, 16 und damit auf die Grindel 8 wirkt, die dem Verschwenken der Grindel 8 mit den Pflugkörpern 7 entgegenwirkt.

Im Ausführungsbeispiel wurden verschiedene Arbeitsspeicher 17; 18 vorgesehen, wobei der Arbeitsspeicher 17 auf Zug und der Arbeitsspeicher 18 auf Druck belastbar ist. Im Sinne der Einheitlichkeit können auch alle Grindel 8 durch eine der Bauformen von Arbeitsspeichern 17 oder 18 abgestützt werden.

In Betriebsstellung der Grindel 8 beträgt die Größe eines Winkels $\alpha$ etwa 90°, wobei der Winkel $\alpha$ von einer Ebene, in der die Querachse 12 und die Achse 19 liegen, und von der Symmetrieachse 20 eingeschlossen wird. Somit wirkt die Vorspannkraft der Arbeitsspeicher 17; 18 an einem Hebelarm, dessen Länge a durch den Abstand der Achse 19 von der Querachse 12 bestimmt wird. Beim Verschwenken der Grindel 8 mit den Hebelteilen 15,16 ändert sich die Länge der Arbeitsspeicher 17; 18, wobei sich die von ihnen auf die Hebelteile 15,16 ausgeübte Kraft geringfügig erhöht. Dabei verändert sich der Winkel $\alpha$ ,und der Hebelarm mit der ursprünglichen Länge a verringert sich auf die Länge b. Es gelten die Beziehungen:

$$a = \overline{12;19} \quad \text{für } \alpha = 90° \text{ und}$$
$$b = a \cdot \sin \alpha < a \text{ für } \alpha \neq 90°.$$

Bei maximaler Ausschwenkung eines Grindels 8 nach Auftreffen des Pflugkörpers 7 auf einen Stein beträgt der Winkel $\alpha$ je nach Art des Arbeitsspeichers 17 oder 18 etwa 150° oder 30°. Damit beträgt die Länge b des Hebelarms, an dem die Kraft des Arbeitsspeichers 17 oder 18 wirkt, dann nur noch b = 0,5•a. Die Kraft des Arbeitsspeichers 17 oder 18 vergrößert sich gleichzeitig auf etwa das 1,2-fache der Vorspannkraft. Somit beträgt das durch die Kraft der Arbeitsspeicher 17 oder 18 erzeugte Drehmoment der Hebelteile 15, 16 um die Querachsen 12 in der maximal ausgeschwenkten Position der Pflugkörper 7 nur noch etwa das 0,6-fache im Vergleich zu der Betriebsstellung. In diesen beiden Stellungen haben die Arbeitsspeicher 17; 18 entweder ihre minimale oder ihre maximale Länge erreicht.
Damit dienen die Arbeitsspeicher 17; 18 auch als Anschläge, in deren Grenzen der Winkel $\alpha$ veränderbar ist. Die den Arbeitsspeichern 17; 18 zugeordneten Gasspeicher sind nicht in den Zeichnungen dargestellt. Sie können in Baueinheit mit den Arbeitsspeichern 17; 18 oder separat in der Nähe der Arbeitsspeicher 17; 18 vorgesehen sein. Es kann aber auch ein zentraler Gasspeicher mit allen Arbeitsspeichern 17; 18 über eine Ringleitung verbunden sein.

Der Abstand der Grindelteile 10, 11 voneinander ist so groß, daß sie sich beim Verschwenken an den zwischen ihnen gelegenen Arbeitsspeichern 17 oder 18 und an den Haltern 22, 23 vorbeibewegen können.

Trifft ein Pflugkörper 7 bei der Arbeit mit dem Kehrpflug auf einen Stein auf, verschwenkt der jeweilige Pflugkörper 7 an dem Grindel 8 nach hinten und oben gegen die Kraft des Arbeitsspeichers 17 oder 18.
Dies kann unter Umständen soweit erfolgen, daß der Pflugkörper 7 ganz aus dem Erdboden herausgedrückt wird. Verringert sich der Bodenwiderstand wieder, taucht der jeweilige Pflugkörper 7 wieder in den Erdboden ein. Es ist von besonderem Vorteil, daß die von den Arbeitsspeichern 17; 18 auf die Pflugkörper 7 übertragene Kraft in Betriebsstellung der Pflugkörper 7 groß ist und in einem Schwenkwinkelbereich, in dem die Aushubhöhe der Scharspitze relativ schnell zunimmt, geringer wird.
Dies wird durch eine erfindungsgemäße Ausführung des Kehrpfluges möglich. Dabei ist weiterhin von besonderem Vorteil, daß für die Steinsicherungen 9 nur sehr wenig Bauraum direkt unter dem Hauptholm 4 erforderlich ist, wodurch ausgeschlossen ist, daß der Durchfluß von Furchenbalken unter dem Hauptholm 4 und das Verschwenken des Hauptholmes 4 relativ zum zum Tragrahmen 2 behindert wird.

Bauteile über oder seitlich des Hauptholmes 4 würden eine solche Behinderung darstellen.

Da die Steinsicherungen 9 vollautomatisch arbeiten, ist kein Handarbeitsaufwand erforderlich, wie dies beispielsweise bei Verwendung von Abscherbolzen der Fall wäre. Eine qualitativ gute Pflugarbeit ist möglich, wobei Furchenbalken durch die Pflugkörper 7 wahlweise nach rechts oder links gewendet, Ernterückstände durch vorhandene Strohelnweisbleche 25 eingearbeitet werden und Gewaltschäden an den Grindeln 8 und den Pflugkörpern 7 nahezu ausgeschlossen sind.

**Patentansprüche**

1. Pflug mit einem Tragrahmen (2), der an der Dreipunkthebevorrichtung oder nur an den Unterlenkern eines landwirtschaftlichen Zugfahrzeugs (1) anbaubar ist, mit einem hinten am Tragrahmen (2) um eine etwa vertikale Achse (5) verschwenkbar gelagerten Hauptholm (4), mindestens einem Schwenkantrieb (6) zur Erzeugung einer Schwenkbewegung des Hauptholmes (4) relativ zum Tragrahmen (2), mit am Hauptholm (4) um Querachsen (12) verschwenkbar gelagerten Grindeln (8), an denen Pflugkörper (7) mit doppelseitigem Streichblech zum Wenden eines Furchenbalkens in vorzuwählender Rechts- oder Linksablage gehaltert sind, mit je einem vorgespannten Arbeitsspeicher (17; 18) je Grindel, wobei die Arbeitsspeicher (17; 18) einerseits um eine Achse (24) verschwenkbar unter dem Hauptholm (4) und andererseits im Abstand zu der jeweiligen Querachse (12) um eine weitere Achse (19) verschwenkbar am Grindel (8) befestigt sind und beim Auftreffen der Pflugkörper (7) auf Hindernisse und dem dadurch verursachten Ausschwenken der Grindel (8) mit den Pflugkörpern (7) um die Querachsen (12) zusätzlich aufgeladen werden, dadurch gekennzeichnet, daß die Querachsen (12), um die die Grindel (8) verschwenkbar sind, unter den Achsen (19) liegen, um die die jeweiligen Arbeitsspeicher (17; 18) an Hebelteilen (15, 16) der Grindel (8) verschwenkbar gelagert sind und daß der Winkel ($\alpha$) zwischen einer Symmetrieachse (20) der Arbeitsspeicher (17; 18) und einer durch die Querachse (12) und die Achse (19) gebildeten Ebene in Betriebsstellung der Grindel (8) und beim Verschwenken der Grindel (8) um die Querachsen (12) je nach Bauform des Arbeitsspeichers (17; 18) zwischen 90° und 170° oder zwischen 90° und 10° beträgt.

2. Pflug nach Anspruch 1, dadurch gekennzeichnet, daß die Arbeitsspeicher (17; 18) hydraulische Kolben-Zylinderanordnungen (17; 18) mit Gasspeicher sind.

3. Pflug nach den Ansprüchen 1 und 2, dadurch gekennzeichnet, daß die Kolben-Zylinderanordnungen (17; 18) nahe unter dem Hauptholm (4) gehaltert sind und ihre Symmetrieachsen (20) in Betriebsstellung der Grindel (8) etwa parallel zu einer Längsachse (21) des Hauptholmes (4) gelegen sind.

4. Pflug nach den Ansprüchen 1 bis 3, dadurch gekennzeichnet, daß die Grindel (8) zweiteilig sind, wobei der Abstand der beiden Teile (10, 11) voneinander in Richtung der Querachse (12) größer ist als der größte Außendurchmesser der Kolben-Zylinderanordnungen (17; 18).

5. Pflug nach den Ansprüchen 1 bis 4, dadurch gekennzeichnet, daß die Kolben-Zylinderanordnungen (17; 18) kolben- oder zylinderseitig um die Achse (19) verschwenkbar zwischen den mit den beiden Teilen (10, 11) der Grindel (8) verbundenen Hebelteilen (15, 16) gelagert sind.

6. Pflug nach den Ansprüchen 1 bis 5, dadurch gekennzeichnet, daß die Grindel (8) um die Querachsen (12) verschwenkbar zwischen Laschen (13, 14) des Hauptholmes (4) gelagert sind.

7. Pflug nach den Ansprüchen 1 bis 6, dadurch gekennzeichnet, daß die Kolben-Zylinderanordnungen (17; 18) zylinder- oder kolbenseitig um die Achse (24) verschwenkbar zwischen Haltern (22, 23) des Hauptholmes (4) befestigt sind, wobei der Außenabstand der Halter (22, 23) in Richtung der Querachse (12) kleiner ist als der jeweilige Abstand der beiden Teile (10, 11) der Grindel (8) voneinander.

8. Pflug nach den Ansprüchen 1 bis 7, dadurch gekennzeichnet, daß die Länge der Kolben-Zylinderanordnungen (17; 18) gemeinsam mit der Schwenkbewegung der Grindel (8) zwischen zwei Anschlagpositionen veränderbar ist, wobei durch diese Anschlagpositionen die Betriebsstellung und die maximal ausgeschwenkte Stellung der Grindel (8) mit den Pflugkörpern (7) definiert ist.

FIG. 2

EP 0 545 215 A1

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-5 000 267 (D.H. HARRELL)<br>* Spalte 1, Zeile 39 - Zeile 68;<br>Abbildungen 1,1A *<br>--- | 1 | A01B3/46<br>A01B15/12<br>A01B61/04 |
| A,D | FR-A-2 390 079 (R. BROUSMICHE)<br>* Seite 5, Zeile 17 - Zeile 35;<br>Abbildungen *<br>--- | 1 | |
| A | EP-A-0 080 816 (AGROWPARTS PTY LTD.)<br>* Seite 2, Zeile 12 - Seite 3, Zeile 16;<br>Abbildungen *<br><br>----- | 1 | |

| | |
|---|---|
| | **RECHERCHIERTE SACHGEBIETE (Int. Cl.5)**<br><br>A01B |

Der vorliegende Recherchenbericht wurde für alle Patentansprüche erstellt

| Recherchenort | Abschlußdatum der Recherche | Prüfer |
|---|---|---|
| BERLIN | 28 JANUAR 1993 | MERCKX A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)